# EUROPEAN PATENT APPLICATION

(11) **EP 4 845 260 A1**
(43) Date of publication of application: **25.11.2026**
(21) Application number: 24925231.3
(22) Date of filing: 20.02.2024
(51) Int. Cl.: H04W 72/044

(54) **UPLINK TRANSMISSION METHOD AND APPARATUS, DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: ZHAO, Nande, Dongguan, Guangdong 523860 (CN)
(74) Representative: Grassi, Stefano
(86) International application number: PCT/CN2024/077737
(87) International publication number: WO 2025/175470

(57) **Abstract**

An uplink transmission method and apparatus, a device and a storage medium, relating to the technical field of communications. The method comprises: a terminal device adjusts a PUSCH transmission in a first OCC group; and the terminal device determines one or more OCC groups on the basis of resources occupied by the PUSCH transmission and/or the OCC length, and sends in the one or more OCC groups PUSCHs using OCCs, the first OCC group being at least one OCC group amongst the one or more OCC groups (410). Provided in the embodiments of the present application is an OCC-group-based PUSCH transmission adjusting solution in which a terminal device adjusts a PUSCH transmission in an OCC group that satisfies a condition, specifying specific behaviors of terminal devices in the case where PUSCHs using OCCs collide with other channels, thus avoiding signal interference caused by collisions, and improving communication reliability.

## Description

### TECHNICAL FIELD

Embodiments of the disclosure relate to the technical field of communications, and particularly to, an uplink transmission method and apparatus, a device, and a storage medium.

### BACKGROUND

In related communication systems, an Orthogonal Cover Code (OCC) is used across Orthogonal Frequency Division Multiplexing (OFDM) symbols or slots occupied by Physical Uplink Shared Channel (PUSCH) transmissions to increase the system capacity.

Based on this, when a PUSCH using OCC collides with other channel(s), how to deal with the collision is an urgent problem to be solved.

### SUMMARY

Embodiments of the disclosure provide an uplink transmission method and apparatus, a device, and a storage medium. The technical solutions provided by the embodiments of the disclosure are as follows.

According to an aspect of the embodiments of the disclosure, there is provided an uplink transmission method including an operation as follows.

A terminal device adjusts a PUSCH transmission in a first OCC group. Herein, the terminal device determines one or more OCC groups according to a resource occupied by the PUSCH transmission and/or an OCC length, and transmits a PUSCH with OCC applied within the one or more OCC groups, the first OCC group being at least one of the one or more OCC groups.

According to an aspect of the embodiments of the disclosure, there is provided an uplink transmission apparatus, including a processing module.

The processing module is configured to adjust a PUSCH transmission in a first OCC group, wherein a terminal device determines one or more OCC groups according to a resource occupied by the PUSCH transmission and/or an OCC length, and transmits a PUSCH with OCC applied within the one or more OCC groups, the first OCC group being at least one of the one or more OCC groups.

According to an aspect of the embodiments of the disclosure, there is provided a terminal device including a processor and a memory storing a computer program. Herein, the processor executes the computer program to perform the method above.

According to an aspect of the embodiments of the disclosure, there is provided a computer-readable storage medium having stored thereon a computer program executed by a processor to perform the method above.

According to an aspect of the embodiments of the disclosure, there is further provided a chip, including a programmable logic circuit and/or a program instruction, which, when the chip runs, are configured to perform the method above.

According to an aspect of the embodiments of the disclosure, there is further provided a computer program product, including computer instructions stored in a computer-readable storage medium from which a processor reads and executes the computer instructions to perform the uplink transmission method above.

The technical solutions provided by the embodiments of the disclosure may include the following beneficial effects.

The embodiments of the disclosure provide a PUSCH transmission adjustment scheme based on an OCC group. That is, the terminal device adjusts a PUSCH transmission in an OCC group that satisfies a condition, and a specific behavior of the terminal device is specified when a PUSCH with OCC applied collides with another channel, avoiding signal interference caused by the collision, and improving communication reliability.

### BRIEF DESCRIPTION OF THE DRAWINGS

FIG. 1 is a schematic architecture diagram of an communication system according to an embodiment of the disclosure.
FIG. 2 is a schematic architecture diagram of another communication system according to an embodiment of the disclosure.
FIG. 3 is a schematic architecture diagram of another communication system according to an embodiment of the disclosure.
FIG. 4 is a flowchart of an uplink transmission method according to an embodiment of the disclosure.
FIG. 5 is a schematic diagram showing using OCC across symbols occupied by a PUSCH transmission according to an embodiment of the disclosure.
FIG. 6 is a schematic diagram showing using OCC across slots occupied by a PUSCH transmission according to an embodiment of the disclosure.
FIG. 7 is a schematic diagram showing collision between a PUSCH in an OCC group and a single PUCCH transmission according to an embodiment of the disclosure.
FIG. 8 is a schematic diagram showing collision between a PUSCH in an OCC group and a single PUCCH transmission according to another embodiment of the disclosure.
FIG. 9 is a schematic diagram showing collision between a PUSCH in an OCC group and a single PUCCH transmission according to another embodiment of the disclosure.
FIG. 10 is a schematic diagram showing that a PUSCH in an OCC group does not satisfy a condition of multiplexing UCI according to an embodiment of the disclosure.
FIG. 11 is a schematic diagram showing that a PUSCH in an OCC group satisfies a condition of multiplexing UCI according to an embodiment of the disclosure.
FIG. 12 is a schematic diagram showing determination as to whether a condition of multiplexing UCI on a PUSCH is satisfied according to a first one of symbols for a PUSCH transmission in an OCC group according to an embodiment of the disclosure.
FIG. 13 is a schematic diagram showing collision between a Type A PUSCH repetition and a PUCCH repetition according to an embodiment of the disclosure.
FIG. 14 is a schematic diagram showing collision between a Type B PUSCH repetition and a PUCCH repetition according to an embodiment of the disclosure.
FIG. 15 is a schematic diagram showing a PUSCH with OCC applied in an OCC group according to an embodiment of the disclosure.
FIG. 16 is a schematic diagram showing collision between PUCCHs on different slots in an OCC group according to an embodiment of the disclosure.
FIG. 17 is a schematic diagram showing collision between a Type A PUSCH repetition not based on counting of available slots and a downlink symbol according to an embodiment of the disclosure.
FIG. 18 is a schematic diagram showing collision between a Type A PUSCH repetition based on counting of available slots and a downlink symbol according to an embodiment of the disclosure.
FIG. 19 is a schematic diagram showing collision between a Type A PUSCH repetition based on counting of available slots and a downlink symbol according to another embodiment of the disclosure.
FIG. 20 a schematic diagram showing collision between a Type A PUSCH repetition based on counting of available slots and a transmission/reception switching time according to an embodiment of the disclosure.
FIG. 21 is a block diagram of an uplink transmission apparatus according to an embodiment of the disclosure.
FIG. 22 is a schematic structural diagram of a terminal device according to an embodiment of the disclosure.

### DETAILED DESCRIPTION

In order to make the object, technical solution and advantages of the disclosure clearer, embodiments of the disclosure will be described in further detail below with reference to the accompanying drawings.

The network architecture and service scenarios described in the embodiments of the disclosure are intended to illustrate the technical solutions in the embodiments of the disclosure more clearly, and do not constitute a limitation on the technical solutions provided in the embodiments of the disclosure. A person of ordinary skill in the art may know that, with the evolution of network architectures and the emergence of new service scenarios, the technical solutions provided in the embodiments of the disclosure are equally applicable to similar technical problems.

The technical solutions provided by the embodiments of the disclosure may be applied to various communication systems, such as a Global System of Mobile communication (GSM) system, a Code Division Multiple Access (CDMA) system, and a Wideband Code Division Multiple Access (WCDMA) system, a General Packet Radio Service (GPRS), a Long Term Evolution (LTE) system, an Advanced Long Term Evolution (LTE-A) system, a New Radio (NR) system, an evolution system of the NR system, an LTE-based access to unlicensed spectrum (LTE-U) system, an NR-based access to unlicensed spectrum (NR-U) system, a Non-Terrestrial Network (NTN) system, a Universal Mobile Telecommunication System (UMTS), a Wireless Local Area Network (WLAN), a Wi-Fi system, a 5th-Generation (5G) system, a Beyond 5G (B5G) system, a 6th-Generation (6G) system or any other communication system.

Generally, a conventional communication system supports a limited number of connections and is easy to implement. However, with the development of communication technologies, a mobile communication system will not only support conventional communication, but also support, for example, device-to-device (D2D) communication, machine-to-machine (M2M) communication, machine type communication (MTC), vehicle-to-vehicle (V2V) communication, or vehicle-to-everything (V2X) communication, etc. The embodiments of the disclosure may also be applied to these communication systems.

The communication system in the embodiments of the disclosure may be applied to a carrier aggregation (CA) scenario, a dual connectivity (DC) scenario, or a standalone (SA) networking scenario.

The communication system in the embodiments of the disclosure may be applied to an unlicensed spectrum, where the unlicensed spectrum may also be considered as a shared spectrum; alternatively, the communication system in the embodiments of the disclosure may also be applied to a licensed spectrum, where the licensed spectrum may also be considered as a non-shared spectrum.

Embodiments of the disclosure can be applied to Non-Terrestrial Network (NTN) systems, and can also be applied to Terrestrial Network (TN) systems. Herein, an NTN generally provides communication services to terrestrial users by means of satellite communication. At present, NTN systems include NR-NTN and IoT-NTN systems, and may further include other NTN systems in the future.

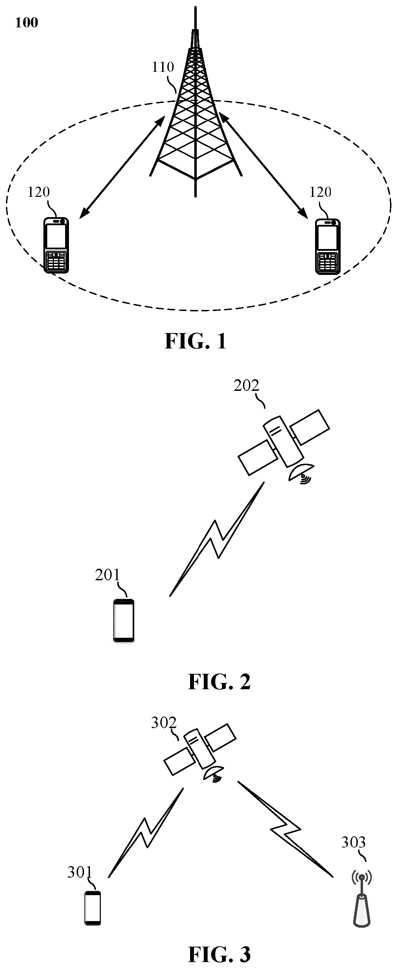

Exemplarily, FIG. 1 is a schematic architecture diagram of an communication system according to an embodiment of the disclosure. As shown in FIG. 1, a communication system 100 may include a network device 110, and the network device 110 may be a device communicating with a terminal device 120. The network device 110 may provide communication coverage for a particular geographic area and may communicate with terminal devices located within the coverage.

FIG. 1 exemplarily illustrates one network device 110 and two terminal devices 120. In some embodiments of the disclosure, the communication system 100 may include multiple network devices, and other numbers of terminal devices may be included within the coverage of each network device, which is not limited by the embodiments of the present disclosure.

Exemplarily, FIG. 2 is a schematic architecture diagram of an communication system according to another embodiment of the disclosure. Referring to FIG. 2, the communication system may include a terminal device 201 and a satellite 202, and wireless communication may be performed between the terminal device 201 and the satellite 202. The network formed between the terminal device 201 and the satellite 202 may also be referred to as an NTN. In the architecture of the communication system shown in FIG. 2, the satellite 202 may have the function of a base station, and the terminal device 201 and the satellite 202 may communicate directly. Under this system architecture, the satellite 202 may be referred to as a network device. In some embodiments of the disclosure, the communication system may include a plurality of satellites 202, and other numbers of terminal devices may be included in the coverage of each satellite 202, which is not limited in the embodiments of the disclosure.

Exemplarily, FIG. 3 is a schematic architecture diagram of an communication system according to another embodiment of the disclosure. Referring to FIG. 3, the communication system includes a terminal device 301, a satellite 302, and a base station 303. Wireless communication can be performed between the terminal device 301 and the satellite 302, and communication can further be performed between the satellite 302 and the base station 303. The network formed between the terminal device 301, the satellite 302, and the base station 303 may also be referred to as an NTN. In the architecture of the communication system shown in FIG. 3, the satellite 302 may not have the function of a base station, and communication between the terminal device 301 and the base station 303 needs relaying through the satellite 302. Under such a system architecture, the base station 303 may be referred to as a network device. In some embodiments of the disclosure, a plurality of base stations 303 may be included in the communication system, each base station 303 may communicate with one or more satellites 302, and other numbers of terminal devices may be included in the coverage of each satellite 302, which is not limited in the embodiments of the disclosure.

In a future evolved communication system, such as a Beyond 5G (B5G) or 6G system, a distributed multiple-input multiple-output (distributed MIMO, also referred to as a distributed antenna system) scenario and/or a massive multiple-input multiple-output (massive MIMO, also referred to as a massive antenna matrix system) scenario may further be included. In some cases, the distributed MIMO and/or massive MIMO may also support cell-free or UE-centric networking scenarios. It is to be understood that the above scenarios are also applicable to the TN and/or NTN.

The terminal device mentioned in the embodiments of the disclosure may refer to user equipment (UE), an access terminal, a subscriber unit, a subscriber station, a mobile station, a mobile platform, a remote station, a remote terminal, a mobile device, a wireless communication device, a user agent, or a user apparatus. Optionally, the terminal device 10 may further be a cellular phone, a cordless phone, a Session Initiation Protocol (SIP) phone, a Wireless Local Loop (WLL) station, a Personal Digital Assistant (PDA), a handheld device having a wireless communication function, a computing device, another processing device connected to a wireless modem, an in-vehicle device, a wearable device, a terminal device in a 5th Generation System (5GS), a terminal device in a future evolved Public Land Mobile Network (PLMN), or the like, which is not limited in the embodiments of the disclosure. For convenience of description, the above-mentioned devices are collectively referred to as terminal devices. In the embodiments of the disclosure, the terms 'terminal device' and 'UE' are usually used interchangeably, but a person skilled in the art may understand that they can express the same meaning.

The network device mentioned in the embodiments of the disclosure may be an access network device, which may be located on the ground, or may be located on a satellite. The access network device is a device deployed in an access network to provide wireless communication functions for terminal devices. The access network device may include macro base stations, micro base stations, relay stations, access points, or any other alternative forms thereof. In systems adopting different radio access technologies, names of devices having the function of an access network device may vary. For example, in a 5G NR system, such a device is referred to as a gNodeB or a gNB. Along with the evolution of communication technologies, the terminology of an 'access network device' may vary. For convenience of description, in the embodiments of the disclosure, the above-mentioned apparatuses providing a wireless communication function for a terminal device are collectively referred to as an access network device. Optionally, a communication relationship may be established between the terminal device and the core network device through the access network device.

The "5G NR system" in the embodiments of the disclosure may also be referred to as a 5G system or an NR system, the meaning thereof can be understood by those skilled in the art. The technical solutions described in the embodiments of the disclosure may be applied to an LTE system, a 5G NR system, a subsequent evolved system of the 5G NR system (such as a B5G system or a 6G system), and may further be applied to other communication systems such as a Narrow Band Internet of Things (NB-IoT) system, which is not limited in the disclosure.

In the embodiments of the disclosure, a network device may provide a service for a cell, and a terminal device communicates with the network device through a transmission resource (e.g., a frequency-domain resource, or in other words, a spectrum resource) on a carrier used by the cell. The cell may be a cell corresponding to the network device (e.g., a base station). The cell may belong to a macro base station, or may belong to a base station corresponding to a small cell. The small cell here may include a metro cell, a micro cell, a pico cell, a femto cell, or the like. These small cells have characteristics of small coverage and low transmit power, and are suitable for providing high-rate data transmission services.

Before describing the technical solutions of the disclosure, a mechanism for handing collision between a Physical Uplink Shared Channel (PUSCH) and a Physical Uplink Control Channel (PUCCH) in an NR system is first introduced and described.
1. A single-slot PUCCH transmission collides with a PUSCH transmission.

If the terminal device wants to transmit, in one slot, the PUCCH and the PUSCH that collide, and at least one of the colliding PUCCH and PUSCH is scheduled by Downlink Control Information (DCI), then the terminal device expects that a first one of symbols, i.e., *S*₀, of the earliest PUCCH or PUSCH among the colliding PUCCH and PUSCH in the slot satisfies following time conditions, so that UCI is multiplexed on the PUSCH:
- *S*₀ is not earlier than a symbol that is ${T}_{proc}^{mux}$ after a last symbol of any Physical Downlink Shared Channel (PDSCH), where Hybrid Automatic Repeat request-Acknowledgement (HARQ-ACK) information of the PDSCH is transmitted on the colliding PUCCH, and ${T}_{proc}^{mux}$ is determined according to a PDSCH processing capability of the terminal device;
- *S*₀ is not earlier than a symbol that is ${T}_{proc , release}^{mux}$ after a last symbol of a PDCCH associated with HARQ-ACK information, where the associated HARQ-ACK information is transmitted on a colliding PUCCH, and wherein ${T}_{proc , release}^{mux}$ is determined according to a PDCCH processing time;
- *S*₀ is not earlier than a symbol that is ${T}_{proc , 2}^{mux}$ or ${T}_{proc , CSI}^{mux}$ after a last symbol of any PDCCH that schedules a colliding PUSCH and schedules a colliding PUCCH carrying HARQ-ACK information, where ${T}_{proc , 2}^{mux}$ and ${T}_{proc , CSI}^{mux}$ are determined according to a PUSCH processing capability of a terminal device.

If the terminal device wants to transmit, in one slot, the PUCCH and the PUSCH that collide, and one of the colliding PUCCHs carries HARQ-ACK information responding to the Semi-Persistent Scheduling (SPS) PDSCH, and the colliding PUSCH is not scheduled by DCI, then the terminal device expects that a first one of symbols, i.e., S₀, of the earliest PUCCH or PUSCH satisfies the first one of time conditions described above.

The terminal device does not expect that the PUCCH or PUSCH scheduled by the DCI collides with other PUCCHs or PUSCHs that do not satisfy the time requirements described above.

The terminal device does not transmit, on one slot, the PUSCH that collides with the PUCCH.

2. A PUSCH repetition collides with a PUCCH repetition.

When the terminal device transmits a PUCCH transmission on a first number ${N}_{PUCCH}^{repeat} > 1$ of slots and transmits a PUSCH with Type A repetition or TBoMS PUSCH on a second number of slots, if the PUCCH transmission collides with the PUSCH transmission on one or more time slots, and a condition of multiplexing UCI on the PUSCH is satisfied in colliding slot(s), then the terminal device transmits the PUCCH and does not transmit the PUSCH on the colliding time slot(s).

When the terminal device transmits a PUCCH on the first number ${N}_{PUCCH}^{repeat} > 1$ of slots and transmits a PUSCH with Type B repetition on the second number of slots, if the PUCCH transmission collides with an actual PUSCH repetition on one or more slots, and the condition of multiplexing UCI on the PUSCH is satisfied for the colliding actual PUSCH repetition, then the terminal device transmits the PUCCH and does not transmit the colliding actual PUSCH repetition.

In the NR system above, when the PUSCH collides with other channels, the PUSCH transmission is adjusted based on the slots. NTN systems use OCC across OFDM symbols or slots occupied by PUSCH transmissions to boost the system capacity. In this case, adjustment of a PUSCH colliding with other channel(s) based on slots will destroy the orthogonality within the OCC group. Therefore, when PUSCH using OCC collides with other channel(s), how to adjust PUSCH transmission is an urgent problem to be solved.

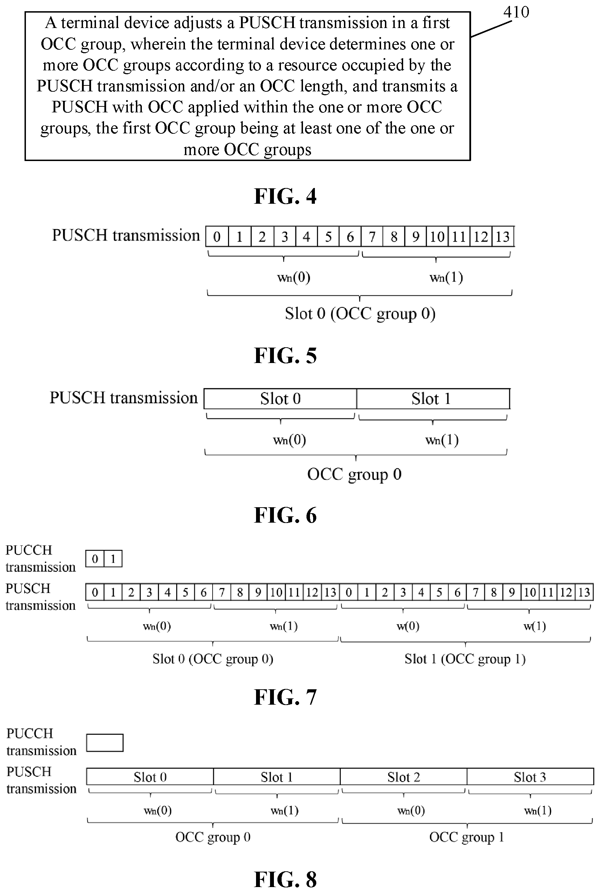

Referring to FIG. 4, it illustrates a flowchart of an uplink transmission method according to an embodiment of the disclosure. This method can be applied to the network architecture shown in FIG. 1. The method may include an operation as follows.

In an operation 410, a terminal device adjusts a PUSCH transmission in a first OCC group. Herein, the terminal device determines one or more OCC groups according to resource(s) occupied by the PUSCH transmission and/or an OCC length, and transmits a PUSCH with OCC applied within the one or more OCC groups, the first OCC group being at least one of the one or more OCC groups.

The terminal device uses OCC across symbols or slots occupied by PUSCH transmissions to improve the system capacity. Herein, symbols and slots serve as units of time-domain division in a communication system, where the symbol refers to an OFDM symbol.

Regarding the use of OCC across symbols occupied by a PUSCH transmission, each PUSCH constitutes an OCC group. The symbols occupied by the PUSCH transmission within the OCC group are partitioned according to an OCC length N_{SF}, with each partition forming an OCC block (or referred to as an OCC orthogonal block), and are multiplied by a corresponding orthogonal sequence wₙ (m), m = 0, 1 ... N_{SF} - 1. Herein, n is an orthogonal sequence index (i.e., an OCC index), and different OCC indexed are used by different users, thereby implementing code division multiplexing within an OCC group.

Taking FIG. 5 as an example, the PUSCH transmission occupies symbols 0-13. If the OCC length *N_{SF}* = 2, the symbols occupied by the PUSCH transmission are divided into 2 groups, that is, 2 OCC blocks, and multiplied by the corresponding orthogonal sequence *wₙ*(*m*)*.* For example, user 1 uses an OCC index *n* = 0, such as *w*₀(*m*) = [1 1], and user 2 uses the OCC index *n* = 1, such as *w*₁(*m*) = [1 - 1], thereby implementing code division multiplexing between user 1 and user 2 within the OCC group.

In addition, regarding the use of OCC across symbols occupied by the PUSCH transmission, the OCC may be used across symbols occupied by the PUSCH transmission that belong to a same slot, or may be used across symbols occupied by the PUSCH transmission that belong to different slots, and the disclosure imposes no limitation thereto.

Regarding the use of OCC across slots occupied by a PUSCH transmission, slots occupied by the PUSCH transmission are partitioned into OCC groups according to an OCC length *N_{SF},* with each OCC group including *N_{SF}* OCC blocks (or referred to as OCC orthogonal blocks), and are multiplied by a corresponding orthogonal sequence *wₙ*(*m*), m = 0, 1 ... *N_{SF} -* 1. Different users use different OCC indexes *n*, thereby implementing code division multiplexing within the OCC group.

Taking FIG. 6 as an example, the PUSCH transmission occupies multiple slots. When the OCC length *N_{SF}* = 2, every two slots occupied by the PUSCH transmission are taken as one OCC group, with each slot within the OCC group being one OCC block, and multiplied by a corresponding orthogonal sequence *wₙ*(*m*)*.* For example, user 1 uses an OCC index *n* = 0, such as *w*₀(*m*) = [1 1], and user 2 uses an OCC index *n* = 1, such as *w*₁(*m*) = [1 - 1], thereby implementing code division multiplexing between user 1 and user 2 within the OCC group.

In some embodiments, the terminal device determines one or more OCC groups according to resource(s) occupied by the PUSCH transmission and an OCC length, and transmits a PUSCH with OCC applied within the one or more OCC groups. For example, for using the OCCs across symbols occupied by the PUSCH transmission, the terminal device may determine one or more OCC groups according to the symbols occupied by the PUSCH transmission and the OCC length, and transmit the PUSCH with OCCs applied within the one or more OCC groups. For another example, for using the OCCs across slots occupied by the PUSCH transmission, the terminal device may determine one or more OCC groups according to the slots occupied by the PUSCH transmission and the OCC length, and transmit the PUSCH with OCCs applied within the one or more OCC groups.

In some embodiments, the terminal device may also determine one or more OCC groups only according to the slots occupied by the PUSCH transmission, and transmit a PUSCH with OCC applied within the one or more OCC groups. For example, for using the OCC across slots occupied by the PUSCH transmission, the terminal device may determine one or more OCC groups, such as determining one slot as one OCC group, according to the slots occupied by the PUSCH transmission, and transmit the PUSCH with OCC applied within the one or more OCC groups.

In some embodiments, the OCC group includes a plurality of OCC blocks, and different OCC blocks in the OCC group correspond to different time-domain and/or frequency-domain resources, and the terminal device applies OCC across the OCC blocks in the OCC group.

In some embodiments, the first OCC group is at least one OCC group among the one or more OCC groups described above, which satisfies a first condition. Herein, the first condition may be a preset condition.

In some embodiments, the first condition is that a PUSCH transmitted by the terminal device collides with a PUCCH. That is, the PUSCH transmitted by the terminal device collides with the PUCCH in the first OCC group.

In some embodiments, if the PUSCH transmitted by the terminal device collides with the PUCCH in the first OCC group, the terminal device cancels transmission of the PUSCH in the first OCC group.

In some embodiments, if the PUSCH transmitted by the terminal device collides with the PUCCH in the first OCC group, the terminal device cancels transmission of the PUCCH in the first OCC group.

In some embodiments, if the PUSCH transmitted by the terminal device collides with the PUCCH in the first OCC group, the terminal device transmits the PUCCH that collides with the PUSCH in the first OCC group, after the PUSCH.

In a case 1, a PUSCH transmission collides with a single-slot PUCCH transmission.

In some embodiments, the PUCCH is a single PUCCH transmission, such as a single-slot PUCCH transmission.

In some embodiments, if the PUSCH transmitted by the terminal device collides with the single-slot PUCCH in the first OCC group, the terminal device cancels transmission of the PUSCH in the first OCC group.

Taking FIG. 7 as an example, the PUSCH transmitted by the terminal device occupies symbols 0-13 in the time slot, and OCC is applied across the symbols occupied by the PUSCH transmission, then the symbols 0-13 of the slot 0 are an OCC group 0, and the symbols 0-13 of the slot 1 are OCC group 1. If the PUCCH transmission occupies the symbol 0-1 of the slot 0 and collides with the PUSCH in the OCC group 0, the terminal device cancels the transmission of the PUSCH in the OCC group 0.

Taking FIG. 8 as an example, the terminal device transmits the PUSCH in slots 0-3, and OCC with N_{SF} = 2 is applied across slots occupied by the PUSCH transmission, then slot 0-1 are an OCC group 0, and slot 2-3 are an OCC group 1. If the PUCCH transmitted by the terminal device in the slot 0 collides with the PUSCH in the OCC group 0, the terminal device cancels the transmission of the PUSCH in the OCC group 0.

In some embodiments, if the PUSCH transmitted by the terminal device collides with the PUCCH in the first OCC group, the terminal device cancels the transmission of the PUCCH in the first OCC group, or transmits, after the PUSCH, the PUCCH that collides with the PUSCH in the first OCC group.

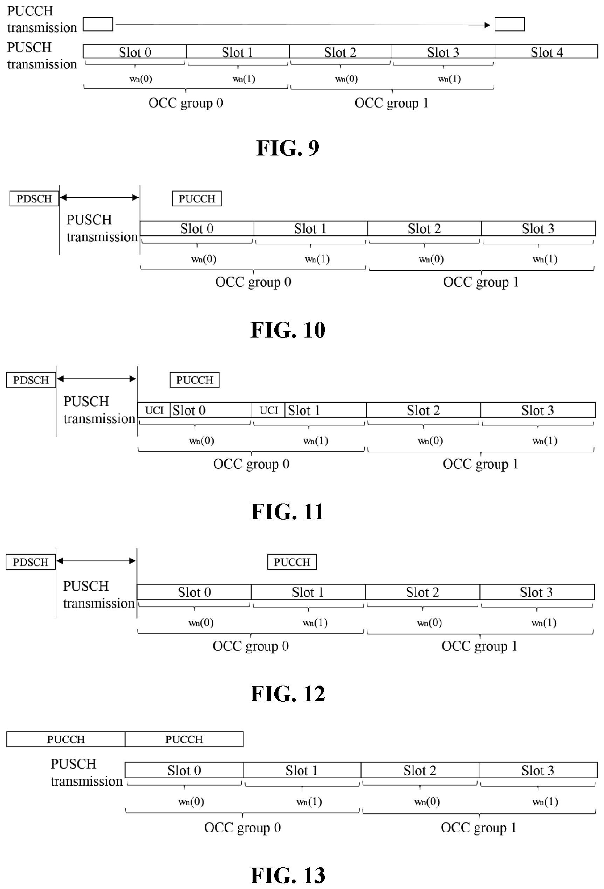

Taking FIG. 9 as an example, if the PUCCH transmitted by the terminal device in the slot 0 collides with the PUSCH in the OCC group 0, the terminal device transmits the PUCCH that collides with the PUSCH in the OCC group 0, after the PUSCH transmission of the OCC group 0 and the OCC group 1.

In some embodiments, if the PUSCH transmitted by the terminal device collides with the single-slot PUCCH in the first OCC group and the terminal device does not have the capability of multiplexing UCI on the PUSCH or does not satisfy the condition of multiplexing the UCI on the PUSCH, the terminal device cancels transmission of the PUSCH in the first OCC group.

Multiplexing the UCI on the PUSCH refers to transmitting the UCI on the PUSCH. Whether the terminal device has the capability of multiplexing the UCI on the PUSCH depends on the capability of the terminal device itself or the configuration of the network device, which is not limited in the disclosure. Further, even if the terminal device has the capability of multiplexing the UCI on the PUSCH, it is still necessary to determine whether the terminal device satisfies the condition of multiplexing the UCI on the PUSCH. If the terminal device satisfies the condition of multiplexing the UCI on the PUSCH, the terminal device can multiplex the UCI on the PUSCH; conversely, if the terminal device does not satisfy the condition of multiplexing the UCI on the PUSCH, the terminal device cannot multiplex the UCI on the PUSCH. For a description of determination as to whether the terminal device satisfies the condition of multiplexing the UCI on the PUSCH, reference is made to embodiments below.

Taking FIG. 10 as an example, the PUCCH transmitted by the terminal device in slot 0 collides with the PUSCH in the OCC group 0, and the PUCCH carries HARQ-ACK information corresponding to a PDSCH. If a time interval between the last symbol of the PDSCH and the first symbol of the PUSCH in the OCC group 0 does not satisfy the condition of multiplexing the UCI on the PUSCH, the terminal device cancels the transmission of the PUSCH in the OCC group 0.

In some embodiments, if the PUSCH transmitted by the terminal device collides with the single-slot PUCCH in the first OCC group and the terminal device does not have the capability of multiplexing UCI on the PUSCH or does not satisfy the condition of multiplexing the UCI on the PUSCH, the terminal device cancels the transmission of the PUCCH in the first OCC group, or transmits, after the PUSCH, the PUCCH that collides with the PUSCH in the first OCC group.

In some embodiments, if the PUSCH transmitted by the terminal device collides with the single-slot PUCCH in the first OCC group, the terminal device transmits the PUSCH multiplexing the UCI in the first OCC group.

In some embodiments, if the PUSCH transmitted by the terminal device collides with the single-slot PUCCH in the first OCC group and the terminal device has the capability of multiplexing UCI on the PUSCH and satisfies the condition of multiplexing the UCI on the PUSCH, the terminal device transmits the PUSCH multiplexing the UCI in the first OCC group.

Taking FIG. 11 as an example, the PUCCH transmitted by the terminal device in slot 0 collides with the PUSCH in the OCC group 0, and the PUCCH carries HARQ-ACK information corresponding to a PDSCH. If a time interval between the last symbol of the PDSCH and the first symbol of the PUSCH in the OCC group 0 satisfies the condition of multiplexing the UCI on the PUSCH, the terminal device transmits the PUSCH multiplexing the UCI in the OCC group 0.

In some embodiments, the terminal device determines whether the condition of multiplexing the UCI on the PUSCH is satisfied by: determining, by the terminal device, whether the condition of multiplexing the UCI on the PUSCH is satisfied according to a first one of symbols for the PUSCH transmission in the first OCC group.

For example, if the PUSCH transmitted by the terminal device collides with the single-slot PUCCH in the first OCC group, and the PUCCH carries HARQ-ACK information corresponding to the PDSCH, then the terminal device acquires a time interval between the last symbol of the PDSCH and the first symbol for PUSCH transmission in the first OCC group, and determines, based on the time interval, whether the condition of multiplexing the UCI on the PUSCH is satisfied. If the time interval is greater than or equal to a certain threshold, it is determined that the condition of multiplexing the UCI on the PUSCH is satisfied; if the time interval is less than a certain threshold, it is determined that the condition of multiplexing the UCI on the PUSCH is not satisfied. The threshold may be agreed by a protocol, configured by a network device, preconfigured, or depend on the implementation of a terminal device, which is not limited in the present disclosure.

Taking FIG. 12 as an example, a PUCCH, carrying HARQ-ACK information corresponding to the PDSCH, transmitted by the terminal device collides with a PUSCH transmission in the OCC group 0. Although the PUCCH is transmitted in slot 1, it is still necessary to determine whether the OCC group 0 satisfies the condition of multiplexing the UCI on the PUSCH according to the first one of symbols for the PUSCH transmission in the OCC group 0, that is, the first symbol for the PUSCH transmission in slot 0. According to the manner above, it is possible to avoid interference between PUSCHs on different slots within the OCC group.

In a case 2, a PUSCH transmission collides with a PUCCH repetition.

In some embodiments, the PUSCH is a PUSCH with repetition Type A, or a Transport Block processing over Multiple Slots (TBoMS) PUSCH, or a PUSCH with repetition Type B; and the PUCCH is a PUCCH repetition.

The PUSCH repetition includes two manners: Type A and Type B. These two manners are not described in detail herein and are well known to those skilled in the art.

In some embodiments, if the PUSCH with repetition Type A or the TBoMS PUSCH transmitted by the terminal device collides with a PUCCH repetition in the first OCC group, the terminal device cancels transmission of the PUSCH in the first OCC group.

Taking FIG. 13 as an example, when the PUCCH repetition transmitted by the terminal device collides with the PUSCH transmission in the OCC group 0, the terminal device cancels the transmission of the PUSCH repetition in the OCC group 0.

In some embodiments, if the PUSCH with repetition Type A or the TBoMS PUSCH transmitted by the terminal device collides with the PUCCH repetition in the first OCC group, the terminal device cancels the transmission of the colliding PUCCH in the first OCC group, or transmits, after the PUSCH, the PUCCH that collides with the PUSCH in the first OCC group.

In some embodiments, if the PUSCH with repetition Type B transmitted by the terminal device collides with a PUCCH repetition in the first OCC group, the terminal device cancels transmission of the PUSCH in the first OCC group.

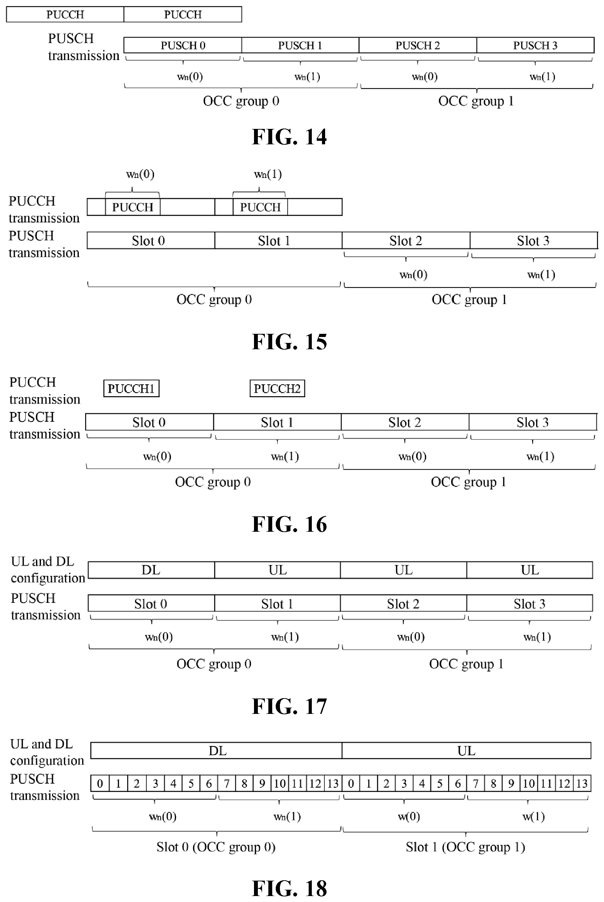

Taking FIG. 14 as an example, for the PUSCH with repetition Type B, the terminal device applies OCC across PUSCHs that are repeatedly transmitted. When the PUCCH repetition transmitted by the terminal device collides with the PUSCH transmission in the OCC group 0, the terminal device cancels the transmission of the PUSCH repetition in the OCC group 0.

In some embodiments, if the PUSCH with repetition Type B transmitted by the terminal device collides with the PUCCH repetition in the first OCC group, the terminal device cancels the transmission of the colliding PUCCH in the first OCC group, or transmits, after the PUSCH, the PUCCH that collides with the PUSCH in the first OCC group.

In the case 1 and the case 2 described above, when the PUSCH transmitted by the terminal device collides with the PUCCH in the first OCC group, the terminal device cancels the transmission of the colliding PUSCH or PUCCH in the first OCC group, or transmits the colliding PUCCH after the PUSCH, or transmits the PUSCH multiplexing the UCI, thereby avoiding the collision between the PUSCH and the PUCCH in the first OCC group. Herein, the terminal device cancels the transmission of the colliding PUSCH in the first OCC group, which can guarantee normal transmission of information on the PUCCH. The terminal device cancels the PUCCH of the transmission of the colliding PUSCH in the first OCC group, which can avoid the interference of the PUCCH with other multiplexing users. When the PUSCH transmitted by the terminal device collides with the PUCCH in the first OCC group, the specific way that the terminal device adopts to adjust the PUSCH transmission in the first OCC group may be agreed by the protocol or configured by the network device, which is not limited in the disclosure.

Hereinafter, manners of transmission of the PUCCH in the OCC group will be described.

In some embodiments, if the terminal device cancels transmission of the PUSCH in the first OCC group, the terminal device transmits the PUCCH with OCC applied in the first OCC group. Herein, an OCC sequence used by the terminal device to transmit the PUCCH in the first OCC group may be a reuse of an OCC sequence used to transmit the PUSCH in the first OCC group, or a set of OCC sequences may be re-determined, which is not limited in the disclosure.

Taking FIG. 15 as an example, after canceling the transmission of the PUSCH in the OCC group 0, the terminal device reuses an orthogonal sequence applied in the OCC group 0 to transmit the PUCCH, thereby maintaining orthogonality between different users in the OCC group 0.

In some embodiments, if the terminal device cancels transmission of the PUSCH in the first OCC group, the terminal device does not expect a collision of PUCCHs on different OCC blocks in the first OCC group.

Taking FIG. 16 as an example, a PUCCH 1 and a PUCCH 2 transmitted by the terminal device collide with PUSCHs on a slot 0 and a slot 1 in the OCC group 0, respectively. Although the terminal device cancels the transmission of the PUSCHs in the OCC group 0 to avoid collision with the PUCCHs, when the network device performs joint reception across the slots in the OCC group 0, the PUCCH 1 will collide with the PUCCH 2. Therefore, it is necessary to specify that the terminal device does not expect a collision between PUCCHs on the slot 0 and the slot 1 in the OCC group 0.

In some embodiments, the operation of transmitting, by the terminal device, the PUSCH multiplexing UCI in the first OCC group includes: transmitting, by the terminal device, PUSCHs multiplexing same UCI on different OCC blocks in the first OCC group.

Taking FIG. 11 as an example, the PUSCHs transmitted by the terminal device on slot 0 and slot 1 in the OCC group 0 should multiplex the same UCI, thereby guaranteeing that the PUSCHs on these two slots can be jointly received

With the above-described manner, when the PUSCH transmitted by the terminal device collides with the PUCCH in the first OCC group, the terminal device transmits the PUCCH with OCC applied in the first OCC group, and/or does not expect collision between PUCCHs on different OCC blocks in the first OCC group, thereby preventing the PUCCHs in the first OCC group from colliding.

In some embodiments, the first condition is that a PUSCH transmitted by the terminal device collides with a first symbol. That is, the PUSCH transmitted by the terminal device collides with the first symbol in the first OCC group.

In some embodiments, if the PUSCH transmitted by the terminal device collides with the first symbol in the first OCC group, the terminal device cancels transmission of the PUSCH in the first OCC group.

In some embodiments, for a Type A PUSCH repetition that is not based on counting of available slots, if the PUSCH transmitted by the terminal device collides with the first symbol in the first OCC group, the terminal device cancels transmission of the PUSCH in the first OCC group.

Taking FIG. 17 as an example, if the PUSCH repetition is not based on counting of available slots and the PUSCH on the slot 0 collides with a downlink symbol, the terminal device cancels transmission of the PUSCH repetition in the OCC group 0.

In some embodiments, if the PUSCH transmitted by the terminal device collides with the first symbol in the first OCC group, the terminal device cancels transmission of the PUSCH in the first OCC group, and/or determines the OCC groups based on available slots.

In some embodiments, for a Type A PUSCH repetition that is not based on counting of available slots or for a TBoMS PUSCH, if the PUSCH transmitted by the terminal device collides with the first symbol in the first OCC group, the terminal device cancels transmission of the PUSCH in the first OCC group, and/or determines the OCC groups based on available slots. Herein, the first symbol is a downlink symbol determined based on uplink and downlink configuration information or based on time-domain position information of an SSB.

Taking FIG. 18 as an example, if the PUSCH repetition is based on counting of available slots and the PUSCH in the OCC group 0 collides with a downlink symbol, the terminal device cancels transmission of the PUSCH in the OCC group 0.

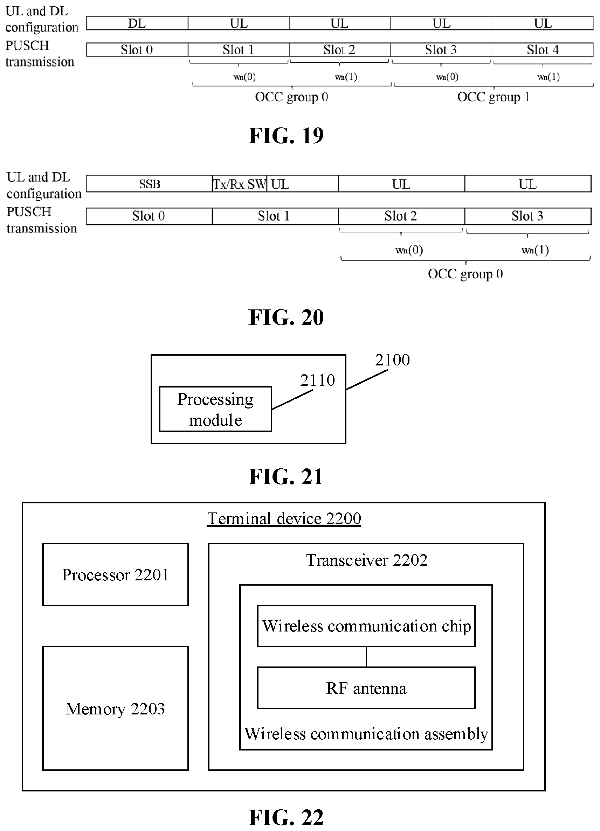

Taking FIG. 19 as an example, if the PUSCH repetition is based on the counting of available slots and the PUSCH on the slot 0 collides with the downlink symbol, the terminal device cancels the transmission of the PUSCH on the slot 0, and determines OCC groups based on uplink available slots, that is, the OCC group 0 includes slots 1-2, and the OCC group 1 includes slots 3-4.

In some embodiments, the first symbol is a symbol indicated by DCI for downlink reception by the terminal device, or a downlink symbol indicated by DCI 2_0. Here, the DCI 2_0 (or DCI format 2_0) is used to notify a slot format, a Channel Occupancy Time (COT) duration, an available Resource Block (RB) set, and search space group switching.

In some embodiments, if the PUSCH transmitted by the terminal device collides, in the first OCC group, with the symbol indicated by DCI for downlink reception by the terminal device or the downlink symbol indicated by DCI 2_0, the terminal device cancels transmission of the PUSCH in the first OCC group.

In some embodiments, the terminal device is a half-duplex device, and the first symbol is a symbol where transmission/reception switching processing is performed.

In some embodiments, if the terminal device is a half-duplex device, and the PUSCH transmitted by the terminal device collides, in the first OCC group, with the symbol where the transmission/reception switching processing is performed, the terminal device cancels the transmission of the PUSCH in the first OCC group, and/or determines the OCC groups based on available slots.

Taking FIG. 20 as an example, after receiving an SSB in the slot 0, the half-duplex terminal device performs transmission/reception switching in the time slot 1, causing the symbol where the transmission/reception switching processing is processed to conflict with the PUSCH, then the terminal device cancels the transmission of the PUSCH in the slot 1, and determines the OCC group based on the uplink available slots, that is, the OCC group 0 includes the slots 2-3.

With the above manner, when the PUSCH transmitted by the terminal device collides with the first symbol in the first OCC group, the terminal device cancels the transmission of the PUSCH in the first OCC group, and determines the OCC group(s) based on the available slots, thereby ensuring that the terminal device transmits the PUSCH at a feasible uplink symbol position.

In some embodiments, the first condition is that the PUSCH transmission is canceled by the DCI. If the PUSCH transmission to be transmitted by the terminal device in the first OCC group is canceled by the DCI, the terminal device cancels the transmission of the PUSCH in the first OCC group.

Taking FIG. 6 as an example, if the PUSCH on the slot 0 is instructed to be canceled by the DCI 2_4, the terminal device cancels the transmission of the PUSCH on OCC group 0 (that is, slot 0 and slot 1). Here, the DCI 2_4 (or DCI format 2_4) is used to notify the cancellation of a Physical Resource Block (PRB) and an OFDM symbol for corresponding uplink (UL) transmission from the terminal device.

The embodiments of the disclosure provide a PUSCH transmission adjustment scheme based on an OCC group. That is, the terminal device adjusts a PUSCH transmission in an OCC group that satisfies a condition, and a specific behavior of the terminal device is specified when a PUSCH with OCC applied collides with another channel, avoiding signal interference caused by the collision, and improving communication reliability.

In addition, the technical solutions provided by the embodiments of the disclosure may be applied to an NTN system, or may be extended to any communication system where the OCC scheme is applied.

The following is an embodiment of the apparatus of the disclosure, which can be used to implement the embodiment of the method of the disclosure. For details not disclosed in the apparatus embodiments of the disclosure, reference may be made to the method embodiments of the disclosure.

Referring to FIG. 21, it illustrates a block diagram of an uplink transmission apparatus according to an embodiment of the disclosure. The apparatus has the function of implementing the uplink transmission method described above, and the function can be realized by hardware or by hardware executing corresponding software. The apparatus may be the terminal device described above, or may be provided in the terminal device. As shown in FIG. 21, the apparatus 2100 may include a processing module 2110.

The processing module 2110 is configured to adjust a PUSCH transmission in a first OCC group, wherein a terminal device determines one or more OCC groups according to a resource occupied by the PUSCH transmission and/or an OCC length, and transmits a PUSCH with OCC applied within the one or more OCC groups, the first OCC group being at least one of the one or more OCC groups.

In some embodiments, the PUSCH collides with a PUCCH in the first OCC group.

In some embodiments, the processing module 2110 is configured to: cancel transmission of the PUSCH in the first OCC group; or, cancel transmission of the PUCCH in the first OCC group; or, after the PUSCH, transmit the PUCCH colliding with the PUSCH in the first OCC group.

In some embodiments, the terminal device does not have the capability of multiplexing UCI on the PUSCH, or does not satisfy a condition of multiplexing the UCI on the PUSCH.

In some embodiments, in a case where the terminal device cancels transmission of the PUSCH in the first OCC group, the terminal device transmits the PUCCH with OCC applied in the first OCC group.

In some embodiments, the terminal device does not expect that PUCCHs on different OCC blocks in the first OCC group collide.

In some embodiments, the processing module 2110 is configured to transmit a PUSCH multiplexing UCI in the first OCC group.

In some embodiments, the terminal device has the capability of multiplexing UCI on the PUSCH, and satisfies a condition of multiplexing the UCI on the PUSCH.

In some embodiments, the processing module 2110 is configured to transmit PUSCHs multiplexing same UCI on different OCC blocks in the first OCC group.

In some embodiments, the processing module 2110 is further configured to: determine whether the condition of multiplexing UCI on the PUSCH is satisfied according to a first one of symbols for the PUSCH transmission in the first OCC group.

In some embodiments, the OCC group includes a plurality of OCC blocks, and different OCC blocks in the OCC group correspond to different time-domain and/or frequency-domain resources, and the terminal device applies OCC across the OCC blocks in the OCC group.

In some embodiments, the PUCCH is a single PUCCH transmission.

In some embodiments, the PUSCH is a PUSCH with repetition Type A, or a Transport Block processing over Multiple Slots (TBoMS) PUSCH, or a PUSCH with repetition Type B; and the PUCCH is a PUCCH repetition.

In some embodiments, the PUSCH collides with a first symbol in the first OCC group.

In some embodiments, the processing module 2110 is configured to cancel transmission of the PUSCH in the first OCC group.

In some embodiments, the PUSCH is a Type A PUSCH repetition that is not based on counting of available slots; or, the first symbol is a symbol indicated by Downlink Control Information (DCI) for downlink reception by the terminal device, or a downlink symbol indicated by DCI 2_0.

In some embodiments, the processing module 2110 is configured to cancel transmission of the PUSCH in the first OCC group, and/or determine the OCC groups based on available slots.

In some embodiments, the PUSCH is a Type A PUSCH repetition that is based on counting of available slots, or a TBoMS PUSCH; and the first symbol is a downlink symbol determined based on uplink and downlink configuration information or based on time-domain position information of a Synchronization Signal/PBCH Block (SSB); or, the terminal device is a half-duplex device, and the first symbol is a symbol where transmission/reception switching processing is performed.

In some embodiments, the processing module 2110 is configured to: if the PUSCH transmission is canceled by DCI, cancel transmission of the PUSCH in the first OCC group.

It is to be noted that when the apparatus provided in the above embodiment implements its functions, the division of each functional module described above is illustrated only as an example, and in practical application, the functions described above can be allocated to and implemented by different functional modules according to actual needs, that is, the content structure of the apparatus can be divided into different functional modules to implement all or part of the functions described above.

With regard to the apparatus in the embodiment above, the specific manner in which the various modules perform operations has been described in detail in the embodiments related to the method, and will not be described in detail here. For details not described specifically in the apparatus embodiments, reference may be made to the method embodiments described above.

With reference to FIG. 22, it illustrates a schematic structural diagram of a terminal device according to an embodiment of the disclosure. The terminal device 2200 may include a processor 2201, a transceiver 2202, and a memory 2203. The processor 2201 is configured to implement various processing functions of the terminal device 2200, such as implementing the functions of the processing module, generating information to be transmitted, processing received information, controlling transmission and/or reception, and the like. The transceiver 2202 is used to implement the functions of transmission and/or reception.

The processor 2201 includes one or more processing cores, and executes various functional applications and information processing by running software programs and modules.

The transceiver 2202 may include a receiver and a transmitter, for example, the receiver and the transmitter may be implemented as the same wireless communication component, which may include a wireless communication chip and a radio frequency antenna.

The memory 2203 may be coupled to the processor 2201 and the transceiver 2202.

The memory 2203 may be used to store computer programs executed by the processor, and the processor 2201may be used to execute the computer program to implement the various operations in the method embodiments described above.

In some embodiments, the processor 2110 is configured to adjust a PUSCH transmission in a first OCC group, wherein a terminal device determines one or more OCC groups according to a resource occupied by the PUSCH transmission and/or an OCC length, and transmits a PUSCH with OCC applied within the one or more OCC groups, the first OCC group being at least one of the one or more OCC groups.

For details not described specifically in the embodiment, reference may be made to the above embodiment, which will not be described in detail here.

Furthermore, the memory may be implemented by any type of volatile or non-volatile storage device, or a combination thereof. The volatile or non-volatile storage device includes, but is not limited to, magnetic or optical disk, electrically erasable programmable read-only memory, erasable programmable read-only memory, static random access memory, read-only memory, magnetic memory, flash memory, and/or programmable read-only memory.

An embodiment of the disclosure further provides a computer-readable storage medium having stored thereon a computer program executed by a computer to implement the uplink transmission methods in the embodiments of the disclosure. In some embodiments, the computer-readable storage medium may include a Read-Only Memory (ROM), a Random-Access Memory (RAM), a Solid State Drive (SSD), an optical disc, or the like. The RAM may include a Resistance Random Access Memory (ReRAM) and a Dynamic Random Access Memory (DRAM).

An embodiment of the disclosure further provides a chip, including a programmable logic circuit or a program, the chip being configured to perform the uplink transmission method above.

An embodiment of the disclosure further provides a computer program product, including computer instructions stored in a computer-readable storage medium from which a processor reads and executes the computer instructions to perform the uplink transmission method above.

It is to be understood that the "indication" mentioned in the embodiments of the present disclosure may be a direct indication, may be an indirect indication, or may be indicative of an association. For example, A indicates B, which may mean that A directly indicates B, for example, B may be obtained through A; it may also mean that A indirectly indicates B, for example, A indicates C, and B may be obtained by C; and it may also indicate that there is an association between A and B.

In the embodiments of the disclosure, the term "correspond" may mean that there is a direct correspondence or an indirect correspondence between two items, may also mean that there is an association relationship between the two items, and may also be a relationship such as indication and being indicated, configuration and being configured, etc.

In the embodiments of the present disclosure, the "pre-defined" may be achieved by pre-storing corresponding codes, tables or other means used for indicating relevant information in devices (e.g., including terminal devices and network devices), and the specific implementation thereof is not limited in the present disclosure. For example, "pre-defined" may refer to what is defined in a protocol.

In the embodiments of the present disclosure, the "protocol" may be a standard protocol in the communication field. For example, the protocol may include an BLE protocol, a Wi-Fi protocol, and related protocols applied in future communication systems, which are not limited in the present disclosure.

Reference herein to "a plurality" refers to two or more. The term "and/or" herein describes an association relationship between associated objects and represents that three relationships may exist. For example, A and/or B may represent three conditions: i.e., independent existence of A, existence of both A and B and independent existence of B. The character "/" in the present disclosure generally indicates that the relationship between the related objects is "or".

Reference herein to "greater than or equal to" may mean greater than or equal to, or greater than; and "less than or equal to" may mean less than or equal to, or less than.

In addition, the operation numbers described herein only exemplarily show a possible execution order between the operations. In some other embodiments, the above operations may not be executed in the chronological order of the numbers. For example, two operations with different numbers may be executed simultaneously, or two operations with different numbers may be executed in an order opposite to that shown in the figures, which is not limited in the embodiments of the disclosure.

Those skilled in the art should recognize that in one or more of the examples described above, the functions described in the embodiments of the disclosure may be implemented in hardware, software, firmware, or any combination thereof. When implemented using software, these functions may be stored in a computer readable medium, or transmitted as one or more instructions or codes on a computer readable medium. The computer-readable medium includes a computer storage medium and a communication medium, wherein communication medium includes any medium that facilitates transfer of a computer program from one place to another. The storage medium may be any available medium accessible by a general-purpose or special-purpose computer.

The above describes only exemplary embodiments of the disclosure, and is not intended to limit the disclosure. Any modification, equivalent substitution, improvement and the like made within the spirit and principles of the disclosure should be included within the scope of protection of the disclosure.

## Claims

1. An uplink transmission method, comprising:
adjusting, by a terminal device, a Physical Uplink Shared Channel (PUSCH) transmission in a first Orthogonal Cover Code (OCC) group, wherein the terminal device determines one or more OCC groups according to a resource occupied by the PUSCH transmission and/or an OCC length, and transmits a PUSCH with OCC applied within the one or more OCC groups, the first OCC group being at least one of the one or more OCC groups.

2. The method of claim 1, wherein the PUSCH collides with a Physical Uplink Control Channel (PUCCH) in the first OCC group.

3. The method of claim 2, wherein adjusting, by the terminal device, the PUSCH transmission in the first OCC group comprises:
canceling, by the terminal device, transmission of the PUSCH in the first OCC group; or,
canceling, by the terminal device, transmission of the PUCCH in the first OCC group; or,
after the PUSCH, transmitting, by the terminal device, the PUCCH colliding with the PUSCH in the first OCC group.

4. The method of claim 3, wherein the terminal device does not have the capability of multiplexing Uplink Control Information (UCI) on the PUSCH, or does not satisfy a condition of multiplexing the UCI on the PUSCH.

5. The method of claim 3 or 4, wherein in a case where the terminal device cancels transmission of the PUSCH in the first OCC group, the terminal device transmits the PUCCH with OCC applied in the first OCC group.

6. The method of any one of claims 3 to 5, wherein the terminal device does not expect that PUCCHs on different OCC blocks in the first OCC group collide.

7. The method of claim 2, wherein adjusting, by the terminal device, the PUSCH transmission in the first OCC group comprises:
transmitting, by the terminal device, a PUSCH multiplexing UCI in the first OCC group.

8. The method of claim 7, wherein the terminal device has the capability of multiplexing UCI on the PUSCH, and satisfies a condition of multiplexing the UCI on the PUSCH.

9. The method of claim 7 or 8, wherein transmitting, by the terminal device, the PUSCH multiplexing UCI in the first OCC group comprises:
transmitting, by the terminal device, PUSCHs multiplexing same UCI on different OCC blocks in the first OCC group.

10. The method of claim 4 or 8, further comprising:
determining, by the terminal device, whether the condition of multiplexing UCI on the PUSCH is satisfied according to a first one of symbols for the PUSCH transmission in the first OCC group.

11. The method of claim 6 or 9, wherein the OCC group comprises a plurality of OCC blocks, and different OCC blocks in the OCC group correspond to different time-domain and/or frequency-domain resources, and the terminal device applies OCC across the OCC blocks in the OCC group.

12. The method of any one of claims 2 to 11, wherein the PUCCH is a single PUCCH transmission.

13. The method of any one of claims 2 to 11, wherein the PUSCH is a PUSCH with repetition Type A, or a Transport Block processing over Multiple Slots (TBoMS) PUSCH, or a PUSCH with repetition Type B; and the PUCCH is a PUCCH repetition.

14. The method of claim 1, wherein the PUSCH collides with a first symbol in the first OCC group.

15. The method of claim 14, wherein adjusting, by the terminal device, the PUSCH transmission in the first OCC group comprises:
canceling, by the terminal device, transmission of the PUSCH in the first OCC group.

16. The method of claim 15, wherein
the PUSCH is a Type A PUSCH repetition that is not based on counting of available slots; or,
the first symbol is a symbol indicated by Downlink Control Information (DCI) for downlink reception by the terminal device, or a downlink symbol indicated by DCI 2_0.

17. The method of claim 14, wherein adjusting, by the terminal device, the PUSCH transmission in the first OCC group comprises:
canceling, by the terminal device, transmission of the PUSCH in the first OCC group, and/or determining the OCC groups based on available slots.

18. The method of claim 17, wherein
the PUSCH is a Type A PUSCH repetition that is based on counting of available slots, or a TBoMS PUSCH; and the first symbol is a downlink symbol determined based on uplink and downlink configuration information or based on time-domain position information of a Synchronization Signal/PBCH Block (SSB);
or,
the terminal device is a half-duplex device, and the first symbol is a symbol where transmission/reception switching processing is performed.

19. The method of claim 1, wherein adjusting, by the terminal device, the PUSCH transmission in the first OCC group comprises:
if the PUSCH transmission is canceled by DCI, canceling, by the terminal device, transmission of the PUSCH in the first OCC group.

20. An uplink transmission apparatus, comprising:
a processing module, configured to adjust a Physical Uplink Shared Channel (PUSCH) transmission in a first Orthogonal Cover Code (OCC) group, wherein a terminal device determines one or more OCC groups according to a resource occupied by the PUSCH transmission and/or an OCC length, and transmits a PUSCH with OCC applied within the one or more OCC groups, the first OCC group being at least one of the one or more OCC groups.

21. The apparatus of claim 20, wherein the PUSCH collides with a Physical Uplink Control Channel (PUCCH) in the first OCC group.

22. The apparatus of claim 21, wherein the processing module is configured to:
cancel transmission of the PUSCH in the first OCC group; or,
cancel transmission of the PUCCH in the first OCC group; or,
after the PUSCH, transmit the PUCCH colliding with the PUSCH in the first OCC group.

23. The apparatus of claim 22, wherein the terminal device does not have the capability of multiplexing Uplink Control Information (UCI) on the PUSCH, or does not satisfy a condition of multiplexing the UCI on the PUSCH.

24. The apparatus of claim 22 or 23, wherein in a case where the terminal device cancels transmission of the PUSCH in the first OCC group, the terminal device transmits the PUCCH with OCC applied in the first OCC group.

25. The apparatus of any one of claims 22 to 24, wherein the terminal device does not expect that PUCCHs on different OCC blocks in the first OCC group collide.

26. The apparatus of claim 21, wherein the processing module is configured to transmit a PUSCH multiplexing UCI in the first OCC group.

27. The apparatus of claim 26, wherein the terminal device has the capability of multiplexing UCI on the PUSCH, and satisfies a condition of multiplexing the UCI on the PUSCH.

28. The apparatus of claim 26 or 27, wherein the processing module is configured to transmit PUSCHs multiplexing same UCI on different OCC blocks in the first OCC group.

29. The apparatus of claim 23 or 27, wherein the processing module is further configured to: determine whether the condition of multiplexing UCI on the PUSCH is satisfied according to a first one of symbols for the PUSCH transmission in the first OCC group.

30. The apparatus of claim 25 or 28, wherein the OCC group comprises a plurality of OCC blocks, and different OCC blocks in the OCC group correspond to different time-domain and/or frequency-domain resources, and the terminal device applies OCC across the OCC blocks in the OCC group.

31. The apparatus of any one of claims 21 to 30, wherein the PUCCH is a single PUCCH transmission.

32. The apparatus of any one of claims 21 to 30, wherein the PUSCH is a PUSCH with repetition Type A, or a Transport Block processing over Multiple Slots (TBoMS) PUSCH, or a PUSCH with repetition Type B; and the PUCCH is a PUCCH repetition.

33. The apparatus of claim 20, wherein the PUSCH collides with a first symbol in the first OCC group.

34. The apparatus of claim 33, wherein the processing module is configured to cancel transmission of the PUSCH in the first OCC group.

35. The apparatus of claim 34, wherein
the PUSCH is a Type A PUSCH repetition that is not based on counting of available slots; or,
the first symbol is a symbol indicated by Downlink Control Information (DCI) for downlink reception by the terminal device, or a downlink symbol indicated by DCI 2_0.

36. The apparatus of claim 33, wherein the processing module is configured to cancel transmission of the PUSCH in the first OCC group, and/or determine the OCC groups based on available slots.

37. The apparatus of claim 36, wherein
the PUSCH is a Type A PUSCH repetition that is based on counting of available slots, or a TBoMS PUSCH; and the first symbol is a downlink symbol determined based on uplink and downlink configuration information or based on time-domain position information of a Synchronization Signal/PBCH Block (SSB);
or,
the terminal device is a half-duplex device, and the first symbol is a symbol where transmission/reception switching processing is performed.

38. The apparatus of claim 20, wherein the processing module is configured to: if the PUSCH transmission is canceled by DCI, cancel transmission of the PUSCH in the first OCC group.

39. A terminal device, comprising a processor and a memory storing a computer program, wherein the processor executes the computer program to perform the method of any one of claims 1 to 19.

40. A computer-readable storage medium having stored thereon a computer program executed by a processor to perform the method of any one of claims 1 to 19.

41. A chip, comprising a programmable logic circuit and/or a program instruction, which, when the chip runs, are configured to perform the method of any one of claims 1 to 19.

42. A computer program product, comprising computer instructions stored in a computer-readable storage medium from which a processor reads and executes the computer instructions to perform the method of any one of claims 1 to 19.
